# EUROPEAN PATENT APPLICATION

(11) **EP 4 840 632 A1**
(43) Date of publication of application: **18.11.2026**
(21) Application number: 25176789.3
(22) Date of filing: 15.05.2025
(51) Int. Cl.: B32B 27/08, B32B 27/18, B32B 27/30, B32B 27/32, B32B 27/34, B32B 27/36, C08L 23/04, B32B 5/30, B32B 7/02, B32B 13/04, B32B 13/14, B32B 25/14, E04B 1/66

(54) **WATERPROOFING MEMBRANE WITH GOOD ADHESION TO CONCRETE**

(71) Applicant: Sika Technology AG, 6340 Baar (CH)
(72) Inventor: ACKERMANN, Herbert, 8048 Zürich (CH); KERBER, Carine, 6060 Sarnen (CH)
(74) Representative: Sika Patent Attorneys

(57) **Abstract**

The invention is directed to a waterproofing membrane comprising a contact layer having a first major surface and a second major surface and a waterproofing layer connected to the second major surface of the contact layer, wherein the contact layer comprises an ethylene vinyl acetate copolymer. The invention is also directed to a method for producing a waterproofing membrane and to use of a waterproofing membrane for sealing of a substrate.

## Description

### Technical field

The invention relates to sealing devices for use in the construction industry, for waterproofing of below or above ground building constructions. In particular, the invention relates to waterproofing membranes, which can be used for protecting basements, roofing, and tunneling structures against penetration of water.

### Background Art

In the field of construction, polymeric sheets, often referred to as membranes or panels, are used to protect both underground and above-ground structures, such as basements, tunnels, and roofs, against penetration of water. Waterproofing membranes are applied, for example, to prevent ingress of water through cracks that develop in the concrete structure due to building settlement, load deflection or concrete shrinkage. Roofing membranes are used for waterproofing of flat and low-sloped roof structures. State-of-the-art waterproofing and roofing membranes are single- or multi-layered systems that include at least one polymer-based barrier layer, known as the waterproofing layer, designed to provide watertightness.

Commonly used materials for the barrier layer include plastics, in particular thermoplastics such as plasticized polyvinylchloride (p-PVC), thermoplastic polyolefins (TPO), and elastomers such as ethylene-propylene diene monomer (EPDM). Thermoplastic polyolefins are heterophase polyolefin compositions containing a high crystallinity base polyolefin and a low-crystallinity or amorphous polyolefin modifier. Membranes based on crosslinked EPDM are very flexible and resistant to weathering but they are not heat-weldable due to the chemically crosslinked structure. Membranes composed of TPOs are heat-weldable and less expensive than EPDM-membranes, but they are also somewhat more rigid, which can be a disadvantage in some applications. Membranes based on plasticized PVC are more flexible than TPO membranes, but they contain environmentally harmful plasticizers and heavy metal additives such as flame retardants that may restrict their use in some applications.

In waterproofing applications, the membrane can be post-applied to an existing concrete structure or pre-applied before the concrete structure to be waterproofed is built. In the first case, the membrane is adhered to a surface of the concrete structure to be waterproofed via a layer of an adhesive or by using a sealing tape. In pre-applied waterproofing applications, the membrane is placed with its barrier layer facing against the surface of the underlying structure or formwork and fresh concrete is then cast against the surface of the opposite surface of the membrane thereby fully and permanently bonding the membrane to the surface of the hardening concrete.

One of the well-known disadvantages of TPO-based barrier layers is their notoriously poor bonding properties; they typically show low bonding strength to adhesives that are commonly used in the construction industry, such as epoxy adhesives, polyurethane adhesives, and cementitious compositions. Therefore, a contact layer, for example, a fleece backing, is typically used to improve the bonding of the polymer-based barrier layer to the structure to be waterproofed. Some of the commercially available membranes for pre-applied waterproofing applications comprise a barrier layer and a layer of non-woven fabric as a contact layer, which is adhered to the barrier layer via an adhesive layer. The adhesive layer is used to secure the contact layer to the barrier layer but also to enable improved bonding between the barrier layer and fresh concrete casted against the contact layer. However, the presence of the adhesive layer increases the production costs of these types of waterproofing membranes and the layer of non-woven fabric, which is typically a fleece, in practice prevents the sealing of seams formed between overlapped edges of membranes by heat-welding.

Patent application WO2017/108843 A1 discloses a waterproofing membrane comprising a polymer-based barrier layer and a contact layer composed of a thermoplastic polymer composition comprising high amounts of mineral fillers, such as mineral binders. The waterproofing membrane can be produced by co-extruding melt-processed compositions of the barrier layer and the functional layer and bonding the thus obtained layers to each other, for example, using calendaring cooling rolls.

Waterproofing membranes disclosed in WO2017/108843 A1 provide high adhesion strength to concrete in pre-applied waterproofing applications when the concrete has been casted against the surface of the contact layer and let to harden for 28 days under normal atmospheric conditions.

Despite of building a high adhesion strength with fresh concrete after hardening, the waterproofing membranes of WO2017/108843 A1 have also been found to provide less than optimal early adhesion strength to the casted concrete, i.e. adhesion strength obtained after the casted concrete has been let to harden for 24 hours under normal atmospheric conditions. The low early adhesion strength to the casted concrete can result in detachment of the pre-applied waterproofing membrane, since a formwork used in casting of a concrete structure, such as a base slab, is typically removed only 24 hours after the concrete has been casted.

There is thus a need for a novel type of waterproofing membrane, which builds high early adhesion strength with fresh concrete casted on the surface of the membrane in pre-applied waterproofing applications.

### Summary of the invention

The objective of the present invention is to provide a waterproofing membrane, which can be used to protect surfaces against water penetration, for example in basement waterproofing, roofing and tunneling applications, and which fully and permanently bonds to concrete and other cementitious compositions cast onto the waterproofing membrane after hardening as well as to adhesives commonly used in the construction industry.

Another objective of the present invention is to provide a waterproofing membrane, which builds high early adhesion strength to concrete and other cementitious compositions cast onto the surface of the waterproofing membrane after one day of hardening.

It was surprisingly found out that a waterproofing membrane comprising a waterproofing layer (i.e. barrier layer) and a contact layer based an ethylene vinyl acetate (EVA) copolymer **P1** having at least 65 wt.-%, preferably at least 85 wt.-% of vinyl acetate (VA) content provides high early adhesion strength to concrete cast onto the surface of the contact layer after hardening.

The subject of the present invention is a waterproofing membrane according to claim 1.

One of the advantages of the waterproofing membrane of the present invention is that the formwork can be removed after 24 hours of hardening of the casted concrete without the risk of detachment of the waterproofing membrane from a vertical surface of the casted concrete body.

Another advantage of the waterproofing membrane of the present invention is that the increased early adhesion strength can be achieved without significantly increasing the production costs of the waterproofing membrane compared to the State-of-the-Art waterproofing membranes, such as the ones disclosed in WO2017/108843 A1.

Other aspects of the present invention are presented in other independent claims. Preferred aspects of the invention are presented in the dependent claims.

### Detailed description of the invention

The subject of the present invention is a waterproofing membrane comprising:
a) a contact layer comprising at least 85 wt.-%, preferably at least 95 wt.-% of an ethylene vinyl acetate (EVA) copolymer **P1** having at least 65 wt.-%, preferably at least 85 wt.-% of vinyl acetate (VA) content; and
b) a waterproofing layer comprising at least 50 wt.%, preferably at least 70 wt.-% of at least one polymer selected from **P2.**

### Definitions:

In the context of the present invention, the following definitions may apply to the terms listed below, unless specified otherwise:
The term 'about' refers to an approximation that allows for minor variations from a stated numerical value, parameter, or range, as would be understood by a person skilled in the art. Such variations account for measurement tolerances, experimental uncertainties, and normal manufacturing deviations, provided they do not materially affect the intended function or performance of the claimed invention.

The "amount or content of at least one component X" in a composition, for example "the amount of the at least one polymer P1" refers to the sum of the individual amounts of all polymers P1 contained in the composition. For example, in case the composition comprises 20 wt.-% of at least one polymer P1, the sum of the amounts of all polymers P1 contained in the composition equals 20 wt.-%.

The term "cementitious composition" refers to concrete, shotcrete, grout, mortar, paste or a combination thereof. The terms "paste", "mortar", "concrete", "shotcrete", and "grout" are well-known terms in the State-of-the-Art. Pastes are mixtures comprising a hydraulic cement binder, usually Portland cement, masonry cement, or mortar cement. Mortars are pastes additionally including fine aggregate, for example sand. Concrete are mortars additionally including coarse aggregate, for example crushed gravel or stone. Shotcrete is concrete (or sometimes mortar) conveyed through a hose and pneumatically projected at high velocity onto a surface. The cementitious compositions can be formed by mixing required amounts of certain components, for example, a hydratable cement, water, and fine and/or coarse aggregate, to produce the particular cementitious composition.

In the context of waterproofing membranes, the term "contact layer" refers to a layer of the membrane configured to be positioned adjacent to or in direct contact with a substrate, adhesive composition, or primer during installation. The contact layer is designed to facilitate adhesion of the membrane to the underlying surface, thereby contributing to the watertight integrity of the system. The contact layer may possess specific characteristics such as surface texture, chemical functionality, or adhesive properties to enhance bonding strength and compatibility with different types of substrates. In certain embodiments, the contact layer may further include materials or treatments to improve durability, flexibility, or resistance to environmental factors.

The expression "directly connected" is understood to mean in the context of the present invention that no further layer or substance is present between the layers, and that the opposing surfaces of the two layers are directly bonded to each other or adhere to each other. At the transition area between the two layers, the materials forming the layers can also be present mixed with each other.

The term "formwork" refers to a temporary or permanent mold into which concrete or similar materials are poured to achieve a desired shape and structural configuration. Formwork supports the concrete until it gains sufficient strength to support itself and may be constructed from materials such as wood, metal, plastic, or composite systems. The design and integrity of the formwork are critical to ensuring dimensional accuracy, surface finish, and structural performance of the finished concrete element.

The term "fresh concrete composition" refers to a concrete composition before hardening, in particular before setting of the concrete composition. The casted concrete composition after hardening can be part of a structure, in particular, an above-ground or underground structure, for example a building, garage, tunnel, landfill, water retention, pond, dike or an element for use in pre-fabricated constructions.

The term "glass transition temperature" (T_{g}) refers to the temperature above which temperature a polymer component becomes soft and pliable, and below which it becomes hard and glassy. The glass transition temperature (T_{g}) is preferably determined by dynamical mechanical analysis (DMA) as the peak of the measured loss modulus (G") curve using an applied frequency of 1 Hz and a strain level of 0.1 %.

The term "laid scrim" refers in the present disclosure web-like non-woven products composed of at least two sets of parallel yarns (also designated as weft and warp yarns), which lay on top of each other and are chemically bonded to each other. The yarns of a laid scrim are typically arranged with an angle of 60 - 120°, such as 90 ± 5°, towards each other thereby forming interstices, wherein the interstices preferably occupy more than 60% of the entire surface of the laid scrim. Typical materials for laid scrims include metal fibers, inorganic fibers, in particular glass fibers, and synthetic organic fibers, in particular polyester, polypropylene, polyethylene, and polyethylene terephthalate (PET).

The term "major surface" refers in the present disclosure to the top and bottom surfaces of a sheet-like element defining the thickness of the element there between. The term "first major surface" refers to the top or uppermost surface of a layer in a multi-layered structure. It is the surface that is exposed to the environment or interacts with the next layer or component in the system. The term "second major surface" refers to the bottom or opposite surface of a layer in a multi-layered structure. It is the surface that faces away from the first major surface and is typically in contact with the layer directly beneath it or with other components in the system.

The term "median particle size d₅₀" refers to a particle size below which 50% of all particles by volume are smaller than the d₅₀ value. In analogy, the term d₉₀ particle size refers in the present disclosure to a particle size below which 90% of all particles by volume are smaller than the d₉₀ value and the term "d₁₀ particle size" refers to a particle size below which 10% of all particles by volume are smaller than the d₁₀ value. The particle size distributions can be determined by sieve analysis according to the method as described in ASTM C136/C136M - 2014 standard ("Standard Test Method for Sieve Analysis of Fine and Coarse Aggregates).

The term "melting temperature" refers to a temperature at which a material undergoes transition from the solid to the liquid state. The melting temperature (Tₘ) is preferably determined by differential scanning calorimetry (DSC) according to ISO 11357-3:2018 standard using a heating rate of 2 °C/min. The measurements can be performed with a Mettler Toledo DSC 3+ device and the Tₘ values can be determined from the measured DSC-curve with the help of the DSC-software. In case the measured DSC-curve shows several peak temperatures, the first peak temperature coming from the lower temperature side in the thermogram is taken as the melting temperature (Tₘ).

The term 'non-reactive filler' refers to a particulate or fibrous material that is incorporated into a formulation such as a polymer matrix, adhesive, or membrane primarily to enhance physical properties, including mechanical strength, dimensional stability, or processing characteristics. It does so without participating in any significant chemical reactions with other components of the system during mixing, curing, or application. These fillers remain chemically inert under the conditions of intended use, thereby maintaining their original structure and composition throughout the product's lifecycle.

The term "non-woven fabric" refers in the present disclosure to materials composed of fibers, which are bonded together by using chemical, mechanical, or thermal bonding means, and which are neither woven nor knitted. Non-woven fabrics can be produced, for example, by using a carding or needle punching process, in which the fibers are mechanically entangled to obtain the nonwoven fabric. In chemical bonding, chemical binders such as adhesive materials are used to hold the fibers together in a nonwoven fabric.

The term "normal room temperature" refers to the temperature of 23°C.

The term "polymer" refers to a collective of chemically uniform macromolecules produced by a polyreaction (polymerization, polyaddition, polycondensation) where the macromolecules differ with respect to their degree of polymerization, molecular weight and chain length. The term also comprises derivatives of said collective of macromolecules resulting from polyreactions, that is, compounds which are obtained by reactions such as, for example, additions or substitutions, of functional groups in predetermined macromolecules and which may be chemically uniform or chemically non-uniform.

The term "softening point" refers to a temperature at which compound softens in a rubber-like state, or a temperature at which the crystalline portion within the compound melts. The softening point can be determined by Ring and Ball measurement conducted according to DIN EN 1238:2011 standard.

The term "thermoplastic" refers to any polymer material which can be melted and re-solidified with little or no change in physical properties.

The term "waterproofing layer" or "barrier layer" refers to a layer specifically designed to prevent or significantly restrict the passage of water, moisture, gases, or chemicals through the membrane structure. The barrier layer serves as the primary impermeable component within the membrane system, ensuring the integrity of the waterproofing or protective function. It may be composed of materials such as dense polymers, modified bituminous compositions, or composite laminates engineered for very low permeability. In certain embodiments, the barrier layer may be positioned within a multi-layer membrane assembly and may work in conjunction with other functional layers to provide additional properties such as mechanical strength, flexibility, or resistance to environmental degradation. As used herein, the terms "waterproofing layer" or "barrier layer" are used interchangeably to refer to the same structural or functional element, unless the context indicates otherwise.

The term 'peeling adhesion strength' refers to the measure of the force required to separate two bonded materials by applying a tensile load at a defined angle, typically 90 or 180 degrees, under controlled conditions. It quantifies the adhesive performance of a material or coating in resisting delamination or separation from a substrate. Higher peeling adhesion strength indicates stronger interfacial bonding and improved durability of the adhesive system under mechanical or environmental stress.

Unless defined otherwise, all technical, scientific or other terms used herein have the same meaning as commonly understood by one of ordinary skill in the art to which the invention pertains.

The waterproofing membrane of the present invention comprises a contact layer having a first and second major surfaces and a waterproofing layer, which is indirectly or directly connected to the second major surface of the contact layer. The contact layer and the waterproofing layer are preferably sheet-like elements having a length and width at least 5 times, preferably at least 25 times, more preferably at least 50 times greater than the maximum thickness of the element.

In waterproofing applications, one of the most important characteristics is the strength of adhesion by which a waterproofing membrane is bonded to a substrate, for example a concrete surface, to be sealed against water penetration. In case the strength of adhesion is too low, gaps are more easily formed between the waterproofing membrane and the surface of the substrate, which may lead to loss of water tightness. Furthermore, the early adhesion strength to the casted concrete, i.e. the strength of the adhesion to a casted concrete structure after 24 hours of hardening is especially critical in applications, where the waterproofing membrane has been applied on a vertical surface since the formwork used in the casting process is typically removed on the second day following the casting of the concrete structure.

The present invention is based on the surprising discovery that the early adhesion strength of a pre-applied waterproofing membrane can be improved by employing a contact layer which is primarily based on an ethylene vinyl acetate (EVA) copolymer **P1** having at least 65 wt.-%, preferably at least 85 wt.-% of vinyl acetate (VA) content, thereby achieving markedly improved early-stage adhesion to freshly poured concrete. Without being bound to any theory, it is believed that the observed improvement in early adhesion strength may be attributable to the advantageous surface characteristics and mechanical properties of the contact layer, achieved through precisely controlled weight ratios of the components used, which facilitate accelerated bonding with freshly cast concrete placed onto the contact layer.

### Contact Layer

The waterproofing membrane of the present invention comprises a contact layer comprising at least 85 wt.-%, preferably at least 95 wt.-% of an ethylene vinyl acetate (EVA) copolymer **P1** having at least 65 wt.-%, preferably at least 85 wt.-% of vinyl acetate (VA) content.

In a pre-applied waterproofing membrane systems, contact layer plays a critical role in ensuring durable adhesion between the waterproofing membrane and the subsequently poured structural concrete. This layer is typically engineered to possess adhesive or bonding properties that enable a mechanical or chemical bond with the concrete as it cures, thereby preventing lateral water migration between the membrane and the structure. In addition to promoting bond integrity, the contact layer may also contribute to the membrane's overall resistance to hydrostatic pressure, enhance durability against construction-related stresses, and maintain performance under variable environmental conditions. The effectiveness of the contact layer is essential for the long-term waterproofing performance of below-grade structures.

Contact layer is typically positioned adjacent to or in direct contact with a substrate, adhesive composition, or primer during installation. The contact layer is designed to facilitate adhesion of the membrane to the underlying surface, thereby contributing to the watertight integrity of the system. The contact layer may possess specific characteristics such as surface texture, chemical functionality, or adhesive properties to enhance bonding strength and compatibility with different types of substrates. In certain embodiments, the contact layer may further include materials or treatments to improve durability, flexibility, or resistance to environmental factors. Contact layer is usually designed to interface directly with concrete or other structural materials, forming a durable bond that resists delamination and water ingress. Its composition and surface characteristics are engineered to promote chemical and mechanical adhesion, even under conditions of high moisture, alkalinity, or variable curing stages of concrete.

The contact layer used in the waterproofing membrane of the present invention is composed of a specially formulated ethylene-vinyl acetate (EVA) copolymer resin, which has been identified through extensive experimental evaluation for its superior adhesive performance in concrete environments. A series of comparative adhesion and durability tests were conducted under varying temperature and moisture conditions to optimize the resin formulation. The resulting material exhibits excellent bonding strength to freshly poured and cured concrete surfaces, contributing to the overall integrity and reliability of the waterproofing membrane system.

The vinyl acetate (VA) content in ethylenevinyl acetate (EVA) copolymer significantly influences the polarity, flexibility, and adhesion characteristics of the material. The tailored VA content allows the contact layer to maintain a balance between mechanical strength and bonding performance, which is essential for the long-term integrity and effectiveness of the waterproofing system. The contact layer used in the waterproofing system of the present invention comprises an ethylene-vinyl acetate (EVA) copolymer **P1** with a controlled vinyl acetate (VA) content. The contact layer of the present invention provides an improved bonding with freshly poured concrete.

The EVA copolymer used in the contact layer exhibits an optimized balance of flexibility, cohesion, and hydrophilicity, enabling it to interact effectively with the surface moisture and chemical composition of freshly poured concrete. It results in a mechanical and chemical interlock as the concrete cures, ensuring long-term sealing performance and durability under varying structural and environmental conditions.

The contact layer used in the waterproofing membrane of the present invention is primarily based on an ethylene vinyl acetate (EVA) copolymer **P1**. The contact layer comprises at least 85 wt.-%, preferably at least 95 wt.-% of an ethylene vinyl acetate (EVA) copolymer **P1** having at least 65 wt.-%, preferably at least 85 wt.-% of vinyl acetate (VA) content.

According to one or more embodiments, the ethylene vinyl acetate (EVA) copolymer **P1** has:
- a melting temperature (Tₘ) determined by DSC according to ISO 11357-3:2018 standard in the range of 55 - 250°C, preferably 60 - 200°C, more preferably 65
- 175°C, even more preferably 70 - 165°C, still more preferably 75 - 155°C and/or
- a melt flow rate a melt flow rate determined according to ISO 1133 (190°C/2.16 kg) of not more than 250 g/10 min, preferably not more than 150 g/10 min, more preferably not more than 100 g/10 min, even more preferably not more than 50 g/10 min, still more preferably not more than 25 g/10 min and/or
- a glass transition temperature (T_{g}) determined by dynamical mechanical analysis (DMA) as the peak of the measured loss modulus (G") curve using an applied frequency of 1 Hz and a strain level of 0.1% of at or below 0°C, preferably at or below -10°C, more preferably at or below -20°C, even more preferably at or below -25°C, still more preferably at or below -30°C and/or
- a flexural modulus at 23°C determined according to ISO 178:2019 standard of not more than 750 MPa, preferably not more than 500 MPa, more preferably not more than 350 MPa, even more preferably not more than 250 MPa, still more preferably not more than 150 MPa, most preferably not more than 100 MPa.

According to a preferred embodiment, the contact layer further comprises polyvinyl alcohol (PVA) stabilizer, preferably grafted to the EVA copolymer.

The expression "PVA-grafted EVA copolymer" refers to a modified form of ethylene-vinyl acetate (EVA) copolymer in which polyvinyl alcohol (PVA) chains are chemically bonded (grafted) onto the EVA backbone. When PVA is grafted onto the EVA copolymer, it forms covalent or associative bonds with the polymer backbone, improving compatibility between hydrophilic and hydrophobic phases. This grafting typically enhances dispersion stability, mechanical strength, and adhesion properties by reducing phase separation and improving interfacial interaction with other components, such as cementitious substrates.

Preferably, the PVA content is about 1 wt.-%.

Suitable polyvinyl alcohols include those having a hydrolysis degree of more than 50 mol % (i.e. 50.1 to 100 mol % and particularly 70 to 100 mol %), preferably 85 to 100 mol %, and particularly 90 to 100 mol %. Corresponding polymers are described in DE 10 2007 026 166 A1, for example. The degree of hydrolysis (degree of saponification) indicates the percentage of a polyvinyl acetate base molecule that is saponified to polyvinyl alcohol. The degree of hydrolysis **H** is calculated from the number of residual acetyl groups and therefore from the ester number (EN) using the following formula, and is indicated as mol %:$H = 100 \times \left(100-0.1535\times EN\right) / \left(100-0.0749\times EN\right) .$

The polyvinyl alcohol polymer is preferably used in a form in which the polymer will not dissolve under the influence of neutral water and at room temperature, but will dissolve at a somewhat elevated temperature and under the influence of alkaline media. It is therefore advantageous for the polyvinyl alcohol to be present in not fully hydrolyzed form.

Without wishing to be bound by any theory, it is believed that the ethylene vinyl acetate (EVA) copolymer **P1** has a three dimensional copolymerization structure with the PVA that has high affinity to concrete. PVA adheres to concrete at the molecular level and bonds strongly by swelling in water during concrete casting. The ethylene vinyl acetate (EVA) copolymer **P1** makes cation and anion polarizes. This polarization makes strong ionic bonding with the ions in concrete and provides superior water tightness.

According to an embodiment, the contact layer may further comprise one or more additional polymer **P3** which is different from the ethylene vinyl acetate (EVA) copolymer **P1**. Suitable polymers to be used as the additional polymer **P3** include, for example, ethylene - vinyl acetate copolymer (EVA), ethylene - acrylic ester copolymers, ethylene - α-olefin copolymers, propylene - α-olefin copolymers, propylene - ethylene copolymers, polyethylene (PE), polypropylene (PP), polyvinylchloride (PVC), polyethylene terephthalate (PET), polystyrene (PS), polyamides (PA), chlorosulfonated polyethylene (CSPE), ethylene propylene diene monomer rubber (EPDM), and polyisobutylene (PIB).

According to a preferred embodiment, the contact layer further comprises less than 5 wt.-%, preferably less than 3.5 wt.-%, preferably less than 1 wt.-%, more preferably less than 0.5 wt.-%, of solid mineral fillers having a solubility in water of less than 0.1 g/100 g water, preferably less than 0.05 g/100 g water at a temperature of 20 °C. Most preferably, the contact layer is free of said solid mineral fillers. This is advantageous, for example, with respect to higher values in peel resistance, in case the VA content of the ethylene vinyl acetate (EVA) copolymer **P1** is between 65 and less than 85 wt.-% of vinyl acetate (VA). This can be seen, for example, in the comparison of Ex-2 with Ex-5 and Ex-5 with Ex-6. Said amount of solid mineral fillers is therefore advantageous in combination with the VA content of the ethylene vinyl acetate (EVA) copolymer **P1** being between 65 and less than 85 wt.-% of vinyl acetate (VA).

According to another preferred embodiment, the contact layer further comprises 1 - 10 wt.-%, preferably 2 - 8 wt.-%, more preferably 4 - 6 wt.-%, of solid mineral fillers having a solubility in water of less than 0.1 g/100 g water, preferably less than 0.05 g/100 g water at a temperature of 20 °C. This is advantageous, for example, with respect to higher values in peel resistance, in case the VA content of the ethylene vinyl acetate (EVA) copolymer **P1** is at least 85 wt.-% of vinyl acetate (VA). This can be seen, for example, in the comparison of Ex-3 with Ex-6 and Ex-5 with Ex-6.

According to one or more embodiments, the solid mineral filler is selected from the group consisting of inert mineral fillers, hydraulic binders, non-hydraulic binders, latent hydraulic binders, pozzolanic binders, and synthetic organic fillers.

The term "inert mineral filler" refers to mineral fillers, which, unlike hydraulic binders, do not undergo a hydration reaction in the presence of water. Suitable mineral fillers to be used as the at least one inert mineral filler include, for example, sand, granite, calcium carbonate, magnesium carbonate, clay, expanded clay, diatomaceous earth, pumice, mica, kaolin, talc, potash, dolomite, xonotlite, perlite, vermiculite, Wollastonite, barite, cristobalite, silica (quartz), fumed silica, fused silica, glass beads, hollow glass spheres, ceramic spheres, bauxite, comminuted concrete, and zeolites.

The term "sand" refers in the present document mineral clastic sediments (clastic rocks) which are loose conglomerates (loose sediments) of round or angular small grains, which were detached from the original grain structure during the mechanical and chemical degradation and transported to their deposition point, said sediments having an SiO₂ content of greater than 50 wt.-%, in particular greater than 75 wt.-%, particularly preferably greater than 85 wt.-%. The term "calcium carbonate" when used as inert mineral filler refers to solid particulate substances produced from chalk, limestone or marble by grinding and/or precipitation.

According to one or more embodiment, the solid filler comprises at least one hydraulic binder.

The term "hydraulic binder" refers to substances, which react with water in a hydration reaction under formation of solid mineral hydrates or hydrate phases, which are not soluble in water or have a low water-solubility. Therefore, hydraulic binders, such as Portland cement, can harden and retain their strength even when exposed to water, for example underwater or under high humidity conditions. In contrast, the term "non-hydraulic binder" refers to substances, which harden by reaction with carbon dioxide and which, therefore, do not harden in wet conditions or under water.

Examples of suitable hydraulic binders to be used as the at least one hydraulic binder include hydraulic cements and hydraulic lime. The term "hydraulic cement" refers here to mixtures of silicates and oxides including alite, belite, tricalcium aluminate, and brownmillerite.

Commercially available hydraulic cements can be divided in five main cement types according to DIN EN 197-1, namely, Portland cement (CEM I), Portland composite cements (CEM II), blast-furnace cement (CEM III), pozzolan cement (CEM IV) and composite cement (CEM V). These five main types of hydraulic cement are further subdivided into an additional 27 cement types, which are known to the person skilled in the art and listed in DIN EN 197-1. Naturally, all other hydraulic cements that are produced according to another standard, for example, according to ASTM standard or Indian standard are also suitable for use as at least one hydraulic binder.

According to one or more embodiments, the solid filler comprises at least one non-hydraulic binder.

Examples of suitable non-hydraulic binders to be used as the at least one non-hydraulic binder include air-slaked lime (non-hydraulic lime) and gypsum. The term "gypsum" refers in the present disclosure to any known form of gypsum, in particular calcium sulfate dehydrate, calcium sulfate α-hemihydrate, calcium sulfate ß-hemihydrate, or calcium sulfate anhydrite or mixtures thereof.

According to one or more embodiments, the solid filler comprises at least one latent hydraulic binder.

The term "latent hydraulic binder" refers in the present disclosure to type II concrete additives with a "latent hydraulic character" as defined in DIN EN 206-1:2000 standard. These types of mineral binders are calcium aluminosilicates that are not able to harden directly or harden too slowly when mixed with water. The hardening process is accelerated in the presence of alkaline activators, which break the chemical bonds in the binder's amorphous (or glassy) phase and promote the dissolution of ionic species and the formation of calcium aluminosilicate hydrate phases.

Examples of suitable latent hydraulic binders to be used as the at least one latent hydraulic binder include ground granulated blast furnace slag. Ground granulated blast furnace slag is typically obtained from quenching of molten iron slag from a blast furnace in water or steam to form a glassy granular product and followed by drying and grinding the glassy into a fine powder.

According to one or more embodiments, the solid filler comprises at least one pozzolanic binder.

The term "pozzolanic binder" refers in the present disclosure to type II concrete additives with a "pozzolanic character" as defined in DIN EN 206-1:2000 standard. These types of mineral binders are siliceous or aluminosilicate compounds that react with water and calcium hydroxide to form calcium silicate hydrate or calcium aluminosilicate hydrate phases.

Examples of suitable pozzolanic binders to be used as the at least one pozzolanic binder include natural pozzolans, such as trass, and artificial pozzolans, such as fly ash and silica fume. The term "fly ash" refers in the present disclosure to the finely divided ash residue produced by the combustion of pulverized coal, which is carried off with the gasses exhausted from the furnace in which the coal is burned. The term "silica fume" refers in the present disclosure to fine particulate silicon in an amorphous form. Silica fume is typically obtained as a by-product of the processing of silica ores such as the smelting of quartz in a silica smelter which results in the formation of silicon monoxide gas and which on exposure to air oxidizes further to produce small particles of amorphous silica.

According to one or more embodiments, the solid filler comprises at least one synthetic organic filler.

Suitable synthetic organic materials to be used as the at least one synthetic organic filler include in particular plastic materials having a melting temperature (Tₘ) determined by DSC according to ISO 11357-3:2018 standard of at or above 250°C, preferably at or above 275°C, such as polyamide, aramid, epoxide, polystyrene, expanded polystyrene, polyethylene terephthalate (PET), poly(phenyl ethers), polysulfones, and polyethersulfones.

Preferably, the solid mineral filler is non-reactive filler selected from CaCO₃ or wollastonite.

The term 'non-reactive filler' refers to a particulate or fibrous material that is incorporated into a formulation such as a polymer matrix, adhesive, or membrane primarily to enhance physical properties, including mechanical strength, dimensional stability, or processing characteristics. It does so without participating in any significant chemical reactions with other components of the system during mixing, curing, or application. These fillers remain chemically inert under the conditions of intended use, thereby maintaining their original structure and composition throughout the product's lifecycle.

The solid mineral filler is preferably present in the contact layer as individual solid particles or as aggregates of one or more solid particles, which are dispersed in a continuous phase comprising the ethylene vinyl acetate (EVA) copolymer **P1.** It may also be preferable that the contact layer comprises a homogeneously mixed mixture of the ethylene vinyl acetate (EVA) copolymer **P1** and the solid mineral filler.

The contact layer may further comprise one or more additives such as UV- and heat stabilizers, antioxidants, plasticizers, flame retardants, dyes, pigments such as titanium dioxide and carbon black, matting agents, antistatic agents, impact modifiers, biocides, and processing aids such as lubricants, slip agents, antiblock agents, and denest aids.

The thickness of the contact layer typically varies along the length and width of the waterproofing membrane due to the unsymmetrical surface structure present on the first major surface of the contact layer. Some of the pores and cavities of the contact layer may even reach the first major surface of the barrier layer, in which case the thickness of the contact layer measured at such specific location may not even be measurable.

The structure and the form of the contact layer are not subject to any special restrictions; the contact layer can be in the form of a film, a coating or a nonwoven fabric. The contact layer is preferably in the form of a film, a coating or a nonwoven fabric, in which the fibers comprise a hard core which is surrounded by a layer of the EVA copolymer.

According to a preferred embodiment the contact layer is in the form of a film. If the contact layer is in the form of a film, said film expediently has a thickness ranging from 0.05 to 1 mm, in particular 0.07 to 0.9 mm and particularly preferably 0.1 to 0.7 mm.

According to a preferred embodiment the contact layer is in the form of a coating. If the contact layer is in the form of a coating, however, this coating is applied at a coating weight ranging from 10 to 500 g/m, particularly ranging from 50 to 300 g/m. For the further alternative that the contact layer is in the form of a nonwoven fabric, it expediently has a base weight ranging from 10 to 500 g/m, and particularly ranging from 20 to 300 g/m.

However, it may be preferred that the contact layer has a maximum thickness of not more than 25 mm, preferably not more than 15 mm, more preferably not more than 10 mm, even more preferably not more than 5 mm, still more preferably not more than 2.5 mm.

In the context of the present invention, the maximum thickness of the contact layer can be determined according to DIN EN 1849-2:2010 standard using an optical microscope, such as of type Keyence VHX-600 with 30-fold magnification.

It has also been found out that the mass per unit area of the contact layer may affect the early adhesion strength obtained with the sealing device in pre-applied waterproofing applications. It may be preferred that the contact layer has a mass per unit area of at least 100 g/m², more preferably at least 150 g/m², even more preferably at least 200 g/m².

According to one or more embodiments, the contact layer has a mass per unit weight in the range of 100 - 1500 g/m², preferably 150 - 1250 g/m², more preferably 250 - 1000 g/m², even more preferably 350 - 1000 g/m², still more preferably 450 - 1000 g/m², most preferably 500 - 1000 g/m².

### B. Waterproofing layer (or Barrier Layer):

The waterproofing membrane comprises at least one waterproofing layer, which is preferably directly connected to the second major surface of the contact layer.

According to one or more embodiments, the waterproofing layer has a first and a second major surface, wherein at least a portion of the first major surface of the waterproofing layer is directly connected to the second major surface of the contact layer.

According to one or more embodiments, at least 50%, preferably at least 75 wt.-%, more preferably at least 95% of the area of the first major surface of the waterproofing layer is directly connected to the second major surface of the contact layer.

The composition of the waterproofing layer is not particularly restricted. However, the waterproofing layer should be as waterproof as possible and not to decompose or be mechanically damaged even under prolonged influence of water or moisture.

It is furthermore preferred that the waterproofing layer is in the form of a flexible plastic layer. This allows the waterproofing membrane to be wound into rolls, typically during production, and then easily applied to a surface of a substrate to be waterproofed. Preferably, the waterproofing layer has a tensile modulus of elasticity.

According to one or more embodiments, the waterproofing layer comprises at least 50 wt.-%, preferably at least 65 wt.-%, more preferably at least 75 wt.-%, even more preferably at least 85 wt.-%, even more preferably at least 90 wt.-%, of at least one polymer **P2**.

It may be preferred that the polymer **P2** contained in the waterproofing layer is miscible with the ethylene vinyl acetate (EVA) copolymer **P1** contained in the contact layer. By the polymers being "miscible" is meant in the present disclosure that a polymer blend composed of the ethylene vinyl acetate (EVA) copolymer **P1** and the polymer **P2** has a negative Gibbs free energy and heat of mixing.

The waterproofing layer can further comprise, in addition to the at least one polymer **P2,** one or more additives such as UV- and heat stabilizers, antioxidants, plasticizers, fillers, flame retardants, dyes, pigments such as titanium dioxide and carbon black, matting agents, antistatic agents, impact modifiers, biocides, and processing aids such as lubricants, slip agents, antiblock agents, and denest aids.

It is, however, preferred that the total amount of these types of additives is not more than 35 wt.-%, preferably not more than 25 wt.-%, more preferably not more than 15 wt.-%, even more preferably not more than 10 wt.-%, based on the total weight of the barrier layer.

The thickness of the waterproofing layer is not subjected to any particular restrictions. However, waterproofing membranes comprising a waterproofing layer having a thickness of above 10 mm or below 0.1 mm are usually not practical in waterproofing applications. Preferably, the waterproofing layer has a thickness of at least 0.1 mm, more preferably at least 0.25 mm.

According to one or more embodiments, the waterproofing layer has a thickness of 0.1 - 10.0 mm, preferably 0.25 - 5.0 mm, more preferably 0.3 - 3.5 mm, even more preferably 0.35 - 2.5 mm. The thickness of the barrier layer can be determined by using a measurement method.

The thickness of the waterproofing layer was determined by using a measurement method as defined in DIN EN 1849-2:2010 standard. An optical microscope of type Keyence VHX-600 with 30-fold magnification was used for measuring the thickness of the cross sections.

In case the waterproofing membranes is used for waterproofing of roof substrates, it may be preferred that the waterproofing layer comprises one or more reinforcement layer, which is used for improving the dimensional stability of the barrier layer. It is, however, possible or even preferred that the waterproofing layer does not contain such reinforcement layers, in particular in case the waterproofing membrane is used for waterproofing of underground structures.

The reinforcement layer, if used, may be at least partially embedded, preferably fully embedded into the waterproofing layer. By the expression "at least partially embedded" is meant that the reinforcement layer is at least partially covered by the matrix of the waterproofing layer. The type of the reinforcing layer is not particularly restricted. For example, the reinforcing layers commonly used for improving the dimensional stability of thermoplastic waterproofing and roofing membranes can be used. Preferably, the reinforcing layer comprises at least one layer of fiber material, preferably selected from the group consisting of non-woven fabrics, woven fabrics, and laid scrims, more preferably from the group consisting of non-woven fabrics and laid scrims.

According to one or more embodiments, the thermoplastic polymer **P2** has:
- a melting temperature (Tₘ) determined by DSC according to ISO 11357-3:2018 standard in the range of 55 - 250°C, preferably 60 - 200°C, more preferably 65 - 175°C, even more preferably 70 - 165°C, still more preferably 75 - 155°C and/or
- a melt flow rate a melt flow rate determined according to ISO 1133 (190°C/2.16 kg) of not more than 250 g/10 min, preferably not more than 150 g/10 min, more preferably not more than 100 g/10 min, even more preferably not more than 50 g/10 min, still more preferably not more than 25 g/10 min and/or
- a glass transition temperature (T_{g}) determined by dynamical mechanical analysis (DMA) as the peak of the measured loss modulus (G") curve using an applied frequency of 1 Hz and a strain level of 0.1% of at or below 0°C, preferably at or below -10°C, more preferably at or below -20°C, even more preferably at or below -25°C, still more preferably at or below -30°C and/or
- a flexural modulus at 23°C determined according to ISO 178:2019 standard of not more than 750 MPa, preferably not more than 500 MPa, more preferably not more than 350 MPa, even more preferably not more than 250 MPa, still more preferably not more than 150 MPa, most preferably not more than 100 MPa.

According to one or more embodiments, the polymer **P2** is selected from the group consisting of ethylene - acrylic ester copolymers, ethylene - α-olefin copolymers, propylene - α-olefin copolymers, propylene - ethylene copolymers, polyethylene (PE), polypropylene (PP), polyvinylchloride (PVC), polyethylene terephthalate (PET), polystyrene (PS), polyamides (PA), chlorosulfonated polyethylene (CSPE), ethylene propylene diene monomer rubber (EPDM), and polyisobutylene (PIB).

Preferably, the waterproofing layer further comprises 0-30 wt.%, preferably 0-15 wt.%, of commercial ethylene vinyl acetate (EVA) resin.

Suitable examples of the commercial ethylene vinyl acetate (EVA) resin includes, but are not limited to, Escorene^{®} (from Exxon Mobil), Primeva^{®} (from Repsol Quimica S.A.), Evatane^{®} (from Arkema Functional Polyolefins), Greenflex^{®} from Eni versalis S.p.A., and Levapren^{®} from Arlanxeo GmbH.

According to an embodiment of the invention, the waterproofing layer further comprises a polyester fabric based damage protection layer.

This additional layer serves to enhance the mechanical durability of the waterproofing system by protecting it from potential physical damage during handling, installation, or subsequent construction activities. The inclusion of the polyester fabric-based protection layer contributes to the overall integrity and longevity of the waterproofing performance.

### Additional Layer(s)

According to an embodiment of the invention, the waterproofing membrane of the present invention, further comprising:
c) a release liner or
d) a layer of fiber material or
e) a layer of polymer material that changes its consistency in alkaline environment, wherein the c), d), or e) covers at least a portion of the surface of the contact layer on the side opposite to the side of the waterproofing layer.

The contact layer of the waterproofing membrane of the present invention may comprise one or more additional layers selected from the group consisting of a release liner, a layer of fiber material and a layer of a polymer material that changes its consistency in alkaline environment.

The release liner for use with a waterproofing membrane media are routine to a person skilled in the art. Release liners typically comprises a flexible substrate formed from a polymeric material such as polyethylene, polypropylene, or a polyethylene terephthalate (PET) film, optionally coated with a silicone or fluoropolymer-based release agent on at least one side. The release liner is configured to cover and protect the adhesive surface of the waterproofing membrane prior to application, providing ease of handling, preventing premature adhesion, and maintaining the integrity of the adhesive. The liner may include score lines, perforations, or pull tabs to facilitate easy removal at the point of use. In certain embodiments, the release liner may further include printed indicia or alignment markings to aid in proper placement and installation. The release liner is dimensioned to correspond to the full width and length of the membrane and is designed to be peelable without leaving residue or damaging the adhesive surface.

The waterproofing membrane of the present invention may further comprise a layer of fiber material.

The waterproofing membrane of the present invention may further comprise a layer of fiber material. The choice of fiber material is not restricted and may include, but is not limited to, natural fibers (e.g., cellulose, jute), synthetic fibers (e.g., polyester, polypropylene, polyamide), glass fibers, carbon fibers, aramid fibers (e.g., Kevlar^{®}, Nomex^{®}), ceramic fibers, or combinations thereof. These fibers can be configured in various forms such as woven fabrics, non-woven mats, knitted fabrics, or chopped strands, depending on the desired properties of the membrane. The fiber layer may be integrated within the membrane structure to provide reinforcement, enhance dimensional stability, improve puncture resistance, or serve as a carrier for one or more layers of waterproofing membrane. The specific selection and configuration of the fiber material can be tailored to meet the requirements of different applications without departing from the scope of the invention.

According to an embodiment, the layer of fiber material is non-woven fabric.

### The waterproofing membrane of the present invention may further comprise a layer of polymer material that changes it consistency in alkaline environment

Polymers or thermoplastic polymers that change their consistency under the influence of highly alkaline media are routine to a person skilled in the art. One example of such polymers is polyvinyl alcohols, which partially dissolve under the influence of aqueous media. Such vinyl alcohols are used, for example, for producing "soluble bags" for packaging concrete additives, since these "soluble bags" can be added directly to concrete mixtures. Once the polyvinyl alcohol films have dissolved, the concrete additives contained therein mix with the concrete.

Another example of polymers that change consistency under highly alkaline conditions is copolyesters, since the ester functionality of these polymers hydrolyze in highly alkaline media, causing the polymers to break down.

A further example of polymers that change consistency under the influence of highly alkaline media is polyvinyl acetates and copolymers thereof, since the vinyl acetate units within the polymers are subject to hydrolysis in highly alkaline media, and are thereby converted to polyvinyl alcohols. These, in turn, are readily soluble in water, so that the polymer dissolves completely in the highly alkaline medium.

In connection with the present invention, it is preferable for a polyvinyl alcohol, a thermoplastic copolyester or a copolymer of vinyl acetate to be used as the polymer that changes consistency under the influence of highly alkaline media. A preferred thermoplastic copolyester is based on copolyethylene terephthalate.

The most preferable thermoplastic polymers that change consistency under the influence of highly alkaline media are thermoplastic copolyesters, for example, thermoplastic copolyesters based on polyethylene terephthalate. This polymer type has the advantage over polyvinyl acetate or copolymers thereof that hydrolysis takes place in the side chain of the polymer, whereas with polyvinyl acetate, only the side chains of the polymer are hydrolyzed. Therefore, with copolyesters it is possible to achieve a very substantial change in consistency with a relatively low number of hydrolyses, while with polyvinyl acetate, essentially a complete hydrolysis of the acetate groups is necessary in order to achieve this result.

Within the scope of the present invention, it is also preferable for the thermoplastic polymer to have a low melting point, as defined above. It is particularly preferable for the thermoplastic polymer to have a melting point ranging from 60 to 120° C., particularly 70 to 90° C.

Preferably, the said waterproofing membrane has a single layer or a multi layer structure.

Preferably, the waterproofing membrane of the present invention exhibits a high level of water resistance, maintaining its waterproof integrity even when subjected to a hydrostatic pressure of up to 500 kPa. This ensures that the membrane can effectively prevent water infiltration under extreme conditions, such as deep submersion or heavy water loads, thereby enhancing the durability and reliability of the underlying structure.

The waterproofing membrane of the present invention has been found to maintain its waterproofing properties even under very high hydrostatic pressure, thereby ensuring high-performance water resistance suitable for applications involving significant water loads, such as subterranean structures, tunnels, or water-retaining installations.

Preferably, the said waterproofing membrane is waterproof even at a water pressure of 500kPa.

According to an embodiment, the waterproofing membrane of the present invention has a thickness between 0.5 - 2.5 mm and mass per unit weight in the range of 0.5 - 3.0 kg/m2.

The waterproofing membrane of the present invention have been found out to provide a high early adhesion strength determined after 24 hours of hardening of the fresh concrete casted on the first major surface of the contact layer. In particular, such waterproofing membrane have been found out to have an early adhesion strength, which enables the use of the waterproofing membrane in pre-applied waterproofing applications, wherein the waterproofing membrane is positioned on a vertical surface of a formwork, which is removed within 24 hours after casting of the concrete structure.

Furthermore, it has been found out that the waterproofing membrane exhibits an early concrete adhesion strength of at least 10 N/50 mm, preferably at least 15 N/50 mm, more preferably at least 20 N/50 mm determined as average peel resistance per unit width of the waterproofing membrane upon peeling the waterproofing membrane from a surface of a concrete specimen, which has been obtained by casting a fresh concrete composition on the first major surface of the contact layer and letting it to harden for 24 hours under standard atmosphere (air temperature 23°C, relative air humidity 50%).

Preferably, the said membrane has initial (24 hour) peeling adhesion strength of at least 15N/5cm, preferably at least 40N/5cm and after curing (28 days) peeling adhesion strength of at least 30N/5cm, preferably at least 110N/5cm.

In an aspect, the present invention relates to a method of waterproofing a structure, the method comprising sealing a surface of the structure with the waterproofing membrane of the present invention.

The method for waterproofing structures preferably comprises the steps of i) applying a waterproofing membrane, as specified above, to a structure, wherein the contact layer of the waterproofing membrane is facing the structure, and ii) applying liquid concrete to the contact layer of the waterproofing membrane.

"Liquid concrete" in this document is understood as concrete that has not yet been cured. The concrete can be part of a structure, in particular an above-ground or underground structure, for example a building, garage, tunnel, landfill, water retention pond, dike or an element for use in prefabricated construction.

The liquid concrete is usually cast onto and/or on the contact layer, and can react with the contact layer. If the contact layer is a nonwoven fabric, it is advantageous for the liquid concrete to fully permeate the contact layer. As the concrete cures, a substantially secure bond typically forms between the cured concrete and the contact layer and therefore with the waterproofing membrane, particularly if the concrete in its liquid state has fully permeated the contact layer.

Thus, when the liquid concrete comes into contact with the contact layer, a chemical reaction with the thermoplastic polymer is triggered as a result of the highly alkaline pH level of the concrete, and this reaction leads to a breakdown of the polymer or to a dissolution of the polymer, thereby resulting in strong adhesion between the contact layer and the cured concrete.

According to an embodiment, the structure is an above-ground structure or underground structure, selected from the group consisting of a building, a garage, a tunnel, a landfill or a water retention pond.

With the membranes according to the invention, foundations and other structures can be sealed to prevent seepage, and good bonding with the concrete can be achieved without additional pretreatment measures. The described contact layers are inert before coming into contact with liquid concrete. During concrete casting, i.e., when the membrane comes into contact with liquid concrete, the contact layer develops an adhesive effect, thereby enabling good adhesion to the concrete. At the same time, the contact layer acts as a sealant, and protects the seal against seepage.

The invention further comprises a method for producing waterproofing membranes, as described above, wherein the method involves applying a contact layer to a waterproofing layer. If the contact layer is a film, it can preferably be applied to the waterproofing layer by lamination or bonding, particularly by bonding, to the waterproofing layer. If the contact layer is a coating, it can expediently be applied to the waterproofing layer by hot-melt nozzle extrusion, hot-melt calendering, powder dispersion methods or spray lamination.

The waterproofing membranes according to the present invention are expediently produced as continuous product, wherein the individual layers are attached to one another by calendering and/or lamination, particularly by lamination. The membranes are then wound onto rolls, for example.

Systems for producing membranes according to the invention are routine to a person skilled in the art. In the interest of completeness, reference is made here to the apparatus described in EP 2 299 005, which can be used within the scope of the present invention for producing membranes.

In yet another aspect, the present invention relates to a method for producing waterproofing membrane of the present invention, the method comprising a step of extruding or co-extruding a first molten polymer composition comprising the constituents of the contact layer through an extruder die.

In yet another aspect, the present invention relates to the waterproofing membrane obtained by using the above method.

In yet another aspect, the present invention relates to use of the waterproofing membrane of the present invention, for waterproofing a substrate, preferably concrete substrate.

The term 'concrete substrate' refers to the underlying concrete surface or structural element onto which additional materials, coatings, membranes, or treatments are applied. This substrate serves as the base layer in construction or waterproofing systems and may include cast-in-place concrete, precast elements, or structural slabs.

### Examples

The following are exemplary embodiments intended to illustrate the described invention in more detail. Of course, the invention is not limited to these described exemplary embodiments.

### Preparation of Waterproofing Membranes

The exemplary waterproofing membranes Ex-1 to Ex-6 were produced using a laboratory scale co-extrusion apparatus comprising two twin screw extruders (Berstorff GmbH), a flat die and set of water-cooled calender rolls. A thermoplastic waterproofing membrane based on polymer blend of ethylene vinyl acetate copolymer and linear low-density polyethylene (LLDPE) ratio 50:50, was used as the waterproofing layer in all sealing devices.

**Table 1: Specifications of EVA copolymers having different vinyl acetate (VA) contents used in preparation of contact layers.**

| Type of EVA | Content of Vinyl acetate (VA) |
|---|---|
| EVA 2 | 40% VA |
| EVA 3 | 70% VA |
| EVA 4 | 90% VA |

A first starting composition containing the constituents of the contact layer was melt-processed in a first twin screw extruder. The composition containing the constituents of the waterproofing layer was simultaneously melt-processed in a second twin screw extruder and the obtained first and second molten polymer compositions were co-extruded through a flat die on top of each other to produce a two-layer composite membrane, which was subsequently cooled between the calender rolls. The gap between the calender cooling rolls was adjusted to be somewhat larger than the thickness of the co-extruded membrane. The mass per unit area of the layers varied from 624 to 798 g/m² and the thickness of the waterproofing layer was approximately 0.7 mm.

The extrusion temperature and pressure were measured at a point, where the melt-processed mass entered the inlet of the flat die. The temperature of the cooling rolls was approximately 20°C during the production process.

### Thickness of waterproofing layer

The thickness of the waterproofing layer was determined by using a measurement method as defined in DIN EN 1849-2:2010 standard. An optical microscope of type Keyence VHX-600 with 30-fold magnification was used for measuring the thickness of the cross sections.

### Mass per unit area of contact layers

In order to the determine of the mass per unit area of the contact layer of an exemplary waterproofing membrane, a reference membrane composed of a waterproofing layer having the same thickness and composition as the waterproofing layer of the corresponding exemplary waterproofing membrane was first produced. 57 circular samples having a diameter of 8 cm were then cut from the exemplary waterproofing membrane and the corresponding reference membrane. The mass of each sample was measured with accuracy of 0.01 g and the mass per unit areas were calculated by dividing the measured mass by the calculated area of the sample. The coating weight the contact layer of the exemplary waterproofing membrane was then determined by subtracting the mass per unit area of the reference membrane from the mass per unit area of the exemplary waterproofing membrane. The circular samples were cut from the waterproofing membrane and the reference membrane in the longitudinal direction along a length of ca. 5.5 m, wherein the distance between adjacent samples was ca. 30 cm.

### Preparation of the concrete test specimen

Three sample strips with a dimension of 200 mm (length) x 50 mm (width) were cut from each of the waterproofing membranes produced as described above. The sample strips were placed into formworks having a dimension of 200 mm (length) x 50 mm (width) x 30 mm (height) with the contact layer facing upwards and with the waterproofing layer against the bottom of the formwork.

One edge of each sample strip on the side of the contact layer was covered with an adhesive tape having a length of 50 mm and width coinciding with the width of the strip to prevent the adhesion to the hardened concrete. The adhesive tapes were used to provide easier installation of the test specimens to the peel resistance testing apparatus.

For the preparation of concrete specimen, a batch of fresh concrete formulation was prepared. The fresh concrete formulation was obtained by mixing 8.9900 kg of a concrete dry batch of type MC 0.45 conforming to EN 1766:2017 standard, 0.7440 kg of water and 0.0110 kg of Viscocrete 3082 for five minutes in a tumbling mixer. The concrete dry batch of type MC 0.45 contained 1.6811 kg of CEM I 42.5 N cement (Normo 4, Holcim), 7.3089 kg of aggregates containing 3% Nekafill-15 (from KFN) concrete additive (limestone filler), 24% sand having a particle size of 0-1 mm, 36% sand having a particle size of 1-4 mm, and 37% gravel having a particle size of 4-8 mm. Before blending with water and Viscocrete 3082 the concrete dry batch was homogenized for five minutes in a tumbling mixer.

The formworks containing the sample strips were subsequently filled with the fresh concrete formulation and vibrated for two minutes to release the entrapped air. After hardening for 24 hours under standard atmosphere (air temperature 23°C, relative air humidity 50%), the test concrete specimens were stripped from the formworks and measured for concrete peel resistances (early adhesion strength).

### Concrete peel resistances

The measurement of peel resistances was conducted in accordance with the procedure laid out in the standard DIN EN 1372:2015-06. A Zwick Roell AllroundLine Z010 material testing apparatus equipped with a Zwick Roell 90°-peeling device (type number 316237) was used for conducting the peel resistance measurements.

In the peel resistance measurements, a concrete specimen was clamped with the upper grip of the material testing apparatus for a length of 10 mm at the end of the concrete specimen comprising the taped section of the sample strip. Following, the strip was peeled off from the surface of the concrete specimen at a peeling angle of 90° and at a constant cross beam speed of 100 mm/min. During the measurements the distance of the rolls was approximately 570 mm. The peeling of the sample strip was continued until a length of approximately 140 mm of the strip was peeled off from the surface of the concrete specimen. The values for peel resistance were calculated as average peel force per width of the sample strip [N/ 50 mm] during peeling over a length of approximately 70 mm thus excluding the first and last quarter of the total peeling length from the calculation.

The average peel resistance values presented in Table 2 have been calculated as an average of three measurements conducted with the same sealing device. Measurements have been performed after 24 h (Ini) and 28 d.

**Table 2**

| | Ex-1 | Ex-2 | Ex-3 | Ex-4 | Ex-5 | Ex-6 |
|---|---|---|---|---|---|---|
| EVA 2 | 100 | - | - | 95 | - | - |
| EVA 3 | - | 100 | - | - | 95 | - |
| EVA 4 | - | - | 100 | - | - | 95 |
| Filler CaCO₃ | - | - | - | 5 | 5 | 5 |
| Peel Ini, N/5cm | 4 | 42 | 45 | 4 | 19 | 55 |
| Peel 28d, N/5cm | 5 | 114 | 158 | 4 | 30 | 180 |

It is concluded that contact layers with higher VA content (70%, Ex-2, and 90%, Ex-3) show significant improvement of initial and long term peel to concrete. Moreover, adding a small amount of filler in the high VA variant, Ex-6) further improves the long term peel adhesion.

## Claims

1. A waterproofing membrane comprising:
a) a contact layer comprising at least 85 wt.-%, preferably at least 95 wt.-% of an ethylene vinyl acetate (EVA) copolymer **P1** having at least 65 wt.-%, preferably at least 85 wt.-% of vinyl acetate (VA) content, and
b) a waterproofing layer comprising at least 50 wt.%, preferably at least 70 wt.-% of at least one polymer selected from **P2.**

2. The waterproofing membrane according to claim 1, wherein the polymer **P2** is selected from the group consisting of ethylene - acrylic ester copolymers, ethylene - α-olefin copolymers, propylene - α-olefin copolymers, propylene - ethylene copolymers, polyethylene (PE), polypropylene (PP), polyvinylchloride (PVC), polyethylene terephthalate (PET), polystyrene (PS), polyamides (PA), chlorosulfonated polyethylene (CSPE), ethylene propylene diene monomer rubber (EPDM), and polyisobutylene (PIB).

3. The waterproofing membrane according to any of the preceding claims, wherein the waterproofing layer further comprises 0-30 wt.%, preferably 0-15 wt.%, of commercial ethylene vinyl acetate (EVA) resin.

4. The waterproofing membrane according to any of the preceding claims, wherein the contact layer further comprises less than 5 wt.-%, preferably less than 3.5 wt.-%, more preferably less than 0.5 wt.-%, of solid mineral fillers having a solubility in water of less than 0.1 g/100 g water, preferably less than 0.05 g/100 g water at a temperature of 20 °C.

5. The waterproofing membrane according to claim 1 to claim 3, wherein the contact layer further comprises 1 - 10 wt.-%, preferably 2 - 8 wt.-%, more preferably 4 - 6 wt.-%, of solid mineral fillers having a solubility in water of less than 0.1 g/100 g water, preferably less than 0.05 g/100 g water at a temperature of 20 °C.

6. The waterproofing membrane according to claim 4 or claim 5, wherein the solid mineral filler is non-reactive filler selected from CaCO3 or wollastonite.

7. The waterproofing membrane according to any of the preceding claims, wherein the contact layer further comprises polyvinyl alcohol (PVA) stabilizer, preferably grafted to the EVA copolymer.

8. The waterproofing membrane according to claim 7, wherein the PVA content is about 1 wt.-%.

9. The waterproofing membrane according to any of the preceding claims, wherein the waterproofing layer further comprises a polyester fabric based damage protection layer.

10. The waterproofing membrane according to any of the preceding claims, wherein the said waterproofing membrane has a single layer or a multi layer structure.

11. The waterproofing membrane according to any of the preceding claims, further comprising:
c) a release liner or
d) a layer of fiber material or
e) a layer of polymer material that changes its consistency in alkaline environment, wherein the c), d), or e) covers at least a portion of the surface of the contact layer on the side opposite to the side of the barrier layer.

12. The waterproofing membrane according to any of the preceding claims, wherein the said waterproofing membrane is waterproof even at a water pressure of 500kPa.

13. The waterproofing membrane according to any of the preceding claims, wherein the said waterproofing membrane has a thickness between 0.5 - 2.5 mm and mass per unit weight in the range of 0.5 - 3.0 kg/m2.

14. The waterproofing membrane according to any of the preceding claims, wherein the said waterproofing membrane has initial (24 hour) peeling adhesion strength of at least 15N/5cm, preferably at least 40N/5cm and after curing (28 days) peeling adhesion strength of at least 30N/5cm, preferably at least 110N/5cm.

15. A method of waterproofing a structure, the method comprising sealing a surface of the structure with the waterproofing membrane according to any of the preceding claims.

16. The method according to claim 15, wherein the structure is an above-ground structure or underground structure, selected from the group consisting of a building, a garage, a tunnel, a landfill or a water retention pond.

17. A method for producing waterproofing membrane according to any of the preceding claims, the method comprising a step of extruding or co-extruding a first molten polymer composition comprising the constituents of the contact layer through an extruder die.

18. The waterproofing membrane obtained by using the method according to claim 17.

19. Use of the waterproofing membrane according to any of the preceding claims, for waterproofing a substrate, preferably concrete substrate.
